# EUROPEAN PATENT APPLICATION

(11) **EP 2 222 116 A1**
(43) Date of publication of application: **25.08.2010**
(21) Application number: 09305161.3
(22) Date of filing: 19.02.2009
(51) Int. Cl.: H04W 36/14, H04W 92/02

(54) **Exchanging signaling information between a mobile station and a pdn gateway of a 3GPP evolved packet core network**

(71) Applicant: Alcatel Lucent, 75008 Paris (FR)
(72) Inventor: Melia, Telemaco, 91620, NOZAY (FR); El Mghazli, Yacine, 91620, NOZAY (FR)
(74) Representative: El Manouni, Josiane

(57) **Abstract**

One object of the present invention is a method for exchanging signalling information between a Mobile Station MS and a PDN Gateway PDN-GW of a 3GPP Evolved Packet Core network EPC, at non 3GPP access to EPC, said method comprising a step of:
- exchanging said signalling information between MS and a non 3GPP Access Network entity, using IETF based protocol.

## Description

The present invention generally relates to mobile communication networks and systems.

Detailed descriptions of mobile communication networks and systems can be found in the litterature, such as in particular litterature published by standardisation bodies.

It is simply recalled that in a mobile communication system a Mobile Station MS (or User Equipment UE, or Mobile Node MN) has access, via an Access Network, to mobile services (in particular IP services) provided by a Core Network. There are different types of networks and systems, based on different types of technologies. In particular, different types of technologies can be decomposed into 3GPP ("3^{rd} Generation Partnership Project") and non 3GPP based technologies.

An example of 3GPP based system is Evolved Packet System EPS, comprising E-UTRAN (Evolved UTRAN) and EPC (Evolved Packet Core). EPS is specified in particular in 3GPP TS 23.401.

An example of non 3GPP trusted based system is WiMAX, comprising ASN (Access Service Network) and CSN (Connectivity Service Network). WiMAX is specified in particular in IEEE 802.16e and WiMAX Forum standards.

Generally, there is a need for interworking and mobility between different types of technologies such as 3GPP and non 3GPP based technologies. In particular there is a need for non 3GPP access (such as in particular WiMAX access) to a 3GPP Core Network (such as in particular Evolved Packet Core EPC).

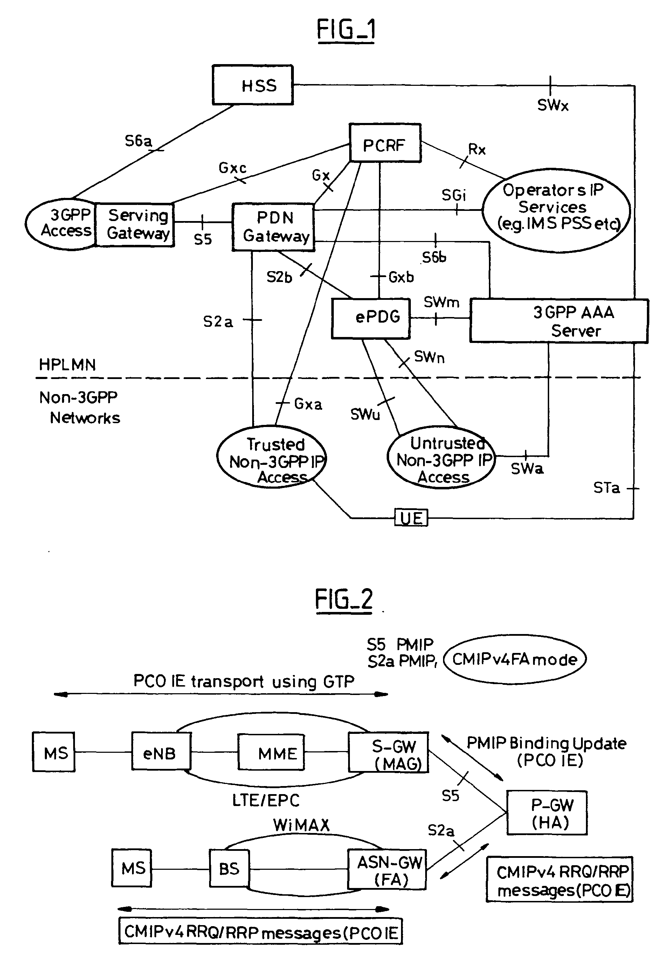

Architecture enhancements for non 3GPP access to EPC are specified in particular in 3GPP TS 23.402. For example, a non roaming architecture for non 3GPP access to EPC using interfaces S5, S2a, S2b is recalled in figure 1 taken from 3GPP TS 23.402.

Use of PMIPv6 over S2a and S5 interfaces is specified in particular in 3GPP TS 29.275. Use of CMIPv4 FA mode over S2a interface is specified in particular in 3GPP TS 24.304.

In such context, the present invention recognizes in particular the following problems.

In 3GPP packet systems in general, and in EPS in particular, there is a possibility to exchange PCO information between a Mobile Station MS and a PDN Gateway (such as P-GW in EPC), for example at bearer activation.

PCO information includes the following information (as specified in particular in 3GPP TS 24.008):
MS to network direction:
   - 0001H (P-CSCF Address Request);
   - 0002H (IM CN Subsystem Signaling Flag);
   - 0003H (DNS Server Address Request);
   - 0004H (Not Supported);
   - 0005H (MS Support of Network Requested Bearer Control indicator);
   - 0006H (Reserved);
   - 0007H (DSMIPv6 Home Agent Address Request;
   - 0008H (DSMIPv6 Home Network Prefix Request);
   - 0009H (DSMIPv6 IPv4 Home Agent Address Request);
   - 000AH (IP address allocation via NAS signalling); and
   - 000BH (IPv4 address allocation via DHCPv4).
Network to MS direction:
   - 0001H (P-CSCF Address);
   - 0002H (IM CN Subsystem Signaling Flag);
   - 0003H (DNS Server Address);
   - 0004H (Policy Control rejection code);
   - 0005H (Selected Bearer Control Mode;
   - 0006H (Reserved);
   - 0007H (DSMIPv6 Home Agent Address) ;
   - 0008H (DSMIPv6 Home Network Prefix); and
   - 0009H (DSMIPv6 IPv4 Home Agent Address).

In such context, the present invention in particular recognizes the following problems with the current state of the standards.

In an interworking architecture enabling both 3GPP and non 3GPP access to EPC, such as the above recalled architecture, it is currently possible to exchange PCO information between MS and PDN-GW through 3GPP access network (E-UTRAN). However, it is not currently possible to exchange PCO information between MS and PDN-GW through non 3GPP trusted access network (such as in particular WiMAX access network).

In other words, there is a need to provide a support for the exchange of signalling information (such as in particular PCO information) between Mobile Station and PDN-Gateway, at non 3GPP access to EPC.

The present invention in particular enables to solve such problems or to avoid such drawbacks. More generally, it is an object of the present invention to improve non 3GPP access to EPC or interworking between 3GPP and non 3GPP based technologies.

These and other objects of the present invention are achieved, in one aspect of the present invention, by providing a method for exchanging signalling information between a Mobile Station MS and a PDN Gateway PDN-GW of a 3GPP Evolved Packet Core network EPC, at non 3GPP access to EPC, said method comprising a step of:
- exchanging said signalling information between MS and a non 3GPP Access Network entity, using IETF based protocol.

These and other objects of the present invention are achieved, in another aspect of the present invention, by providing different entities, such as in particular Mobile Station MS (or User Equipment UE, or Mobile Node MN), non 3GPP Access Network entity (such as in particular WiMAX ASN entity, such as WiMAX ASN Gateway ASN-GW), comprising means for performing such method.

These and other objects of the present invention will become more apparent from the following description taken in conjunction with the accompanying drawings:
- figure 1 illustrates an example of architecture in which the present invention can be used,
- figure 2 illustrates an example of a a method according to an embodiment of the present invention, in the example of architecture illustrated in figure 1,
- figure 3 illustrates an example of a a method according to another embodiment of the present invention, in the example of architecture illustrated in figure 1,
- figure 4 illustrates an example of format of a DHCP message attribute carrying PCO information, for DHCPv4, in an embodiment of the present invention,
- figure 5 illustrates an example of format of a DHCP message attribute carrying PCO information, for DHCPv6, in an embodiment of the present invention.

In the following, the example of non 3GPP technology corresponding to WiMAX and of a non roaming architecture for WiMAX access to EPC will be considered as an example to which the present invention applies. It should however be understood that the present invention is not limited to such examples.

WiMAX systems are considered as trusted non-3GPP networks and then connect to EPC using interface S2a, which in facts means PMIPv6 or CMIPv4. However, as indicated above, it is not currently possible to convey information such as PCO IE (Information Element) between the WiMAX MS and the PDN-GW through the WiMAX access system.

In an embodiment, for S2a PMIPv6 case, the present invention defines an extension of DHCPv4/6 protocol to allow the transport of the PCO field between the MS and the WiMAX ASN-GW.

In an embodiment, for S2a CMIPv4 case, the present invention defines an extension of MIPv4 protocol to allow the transport of the PCO field between the MS and the PDN-GW in the MIPv4 RRQ and RRP messages (using e.g. RFC4332 format), which describes MIPv4 vendor-specific mobility options.

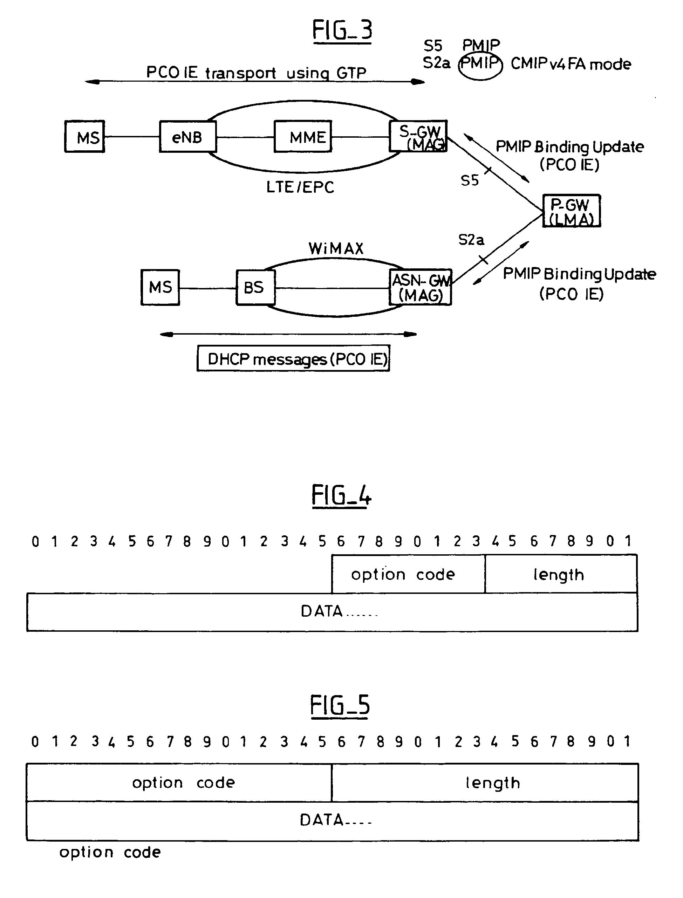

Embodiments of the present invention are illustrated in figures 2 and 3, for S2a CMIPv4 case and S2a PMIPv6 case respectively. For illustration purpose, an example of PCO information corresponding to "DNS server address allocation" will be considered. The MS may need to send a PCO IE to the PDN-GW in order e.g. to explicitly request a DNS server [PCO code = 0003H (DNS Server Address Request);] and the PDN-GW itself will need to send a PCO IE to the MS when allocating the IP address, containing the DNS server that will be used by the MS during the session [PCO code = 0003H (DNS Server Address)]. It should however be understood that the present invention is not limited to such usage example.

Figure 2 illustrates S2a CMIPv4 case. In the example illustrated in figure 2, when performing a network entry in a WiMAX network, the following steps are performed:
1. Radio attachment
2. EAP authentication with CSN AAA
3. When requesting an IP address, the MS issues a CMIPv4 Registration Request RRQ message. In an embodiment, the MS issues a CMIPv4 RRQ embedding the PCO IE.
4. The ASN-GW processes the request and sends another RRQ containing the PCO IE towards the PDN-GW (through S2a).
5. The PDN-GW allocates an IP address to the MS and sends it back to the ASN-GW using a Registration Response RRP message (through S2a). This RRP message will contain the PCO IE (consistently with 3GPP TS 29.275).
6. The ASN-GW answers the MS with a RRP message containing the MS IP address for the requested service and, in an embodiment of the present invention, the embedded PCO IE.

Figure 3 illustrates S2a PMIPv6 case. In the example illustrated in figure 3, when performing a network entry in a WiMAX network, the following steps are performed:
1. Radio attachment
2. EAP authentication with CSN AAA
3. When requesting an IP address, the MS issues a DHCP request. In an embodiment of the present invention, the MS issues a DHCP Request message embedding the PCO IE.
4. The ASN-GW processes the request and generates a Proxy Binding Update PBU message with the PCO IE towards the PDN-GW (through S2a, consistently with 3GPP TS 29.275).
5. The PDN-GW allocates an IP address to the MS and sends it back to the ASN-GW using a Proxy Binding Acknowledgement PBA message (through S2a). This PBA message will contain the PCO IE (consistently with 3GPP TS 29.275).
6. The ASN-GW answers the MS with a DHCP Acknowledgement message containing the MS IP address for the requested service and, in an embodiment of the present invention, the embedded PCO IE.

Other aspects and embodiments of the present invention will now be described in the following sections. In addition, embodiments for conveying Protocol Configuration Options (PCO) [3GPP TS 24.008] from/to the access network to/from the Mobile Node (MN) will be described.

There are scenarios defined in 3GPP 23.402 and WiMax forum NWG where the mobile node accessing the non-3GPP trusted system needs to convey such information to the Mobility Access Gateway (MAG) functionality implemented in the serving gateway (S-GW). The MAG requires the PCO field to send such information to the Local Mobility Agent (LMA) (implemented in the PDN gateway, P-GW) in a Proxy Binding Update (PBU) message. PCO options are exchanged between the MN and the LMA to transport information such as for example P-CSCF address, DNS server address.

### 1. Introduction

The 3GPP standardization body is currently defining the Evolved Packet Core (EPC) architecture. The system integrates several access technologies classified as 3GPP access, non-3GPP trusted access system (e.g. WiMax) or non-3GPP non trusted access system (e.g. WIFI). Among others, two components of EPC are relevant for this subject, namely the S-GW and the P-GW implementing the MAG and the LMA function respectively. When the MN performs a network attachment it sends several information to allow the MAG funtionality to send a Proxy Binding Update to the LMA for connectivity setup and IP address configuration. The PBU optionally contains, as specified in 3GPP TS 29.275, the Protocol Configuration Options. The LMA receiving the PBU message replies with a PBA message containing the requested information. If the interface between the MAG and LMA for non-3GPP trusted access (S2a) is implemented via Proxy Mobile IPv6 then the MN exchanges DHCPv4, DHCPv6 or Neighbor Discovery messages with the S-GW to trigger the MAG funtionality to send PBU messages. Embodiments will be described for encoding PCO options into DHCPv4 and DHCPv6 messages when the host accesses the EPC through a non-3GPP access system i.e. WiMax interface.

### 2. DHCPv4 option for PCO

This option enables the host using an IPv4 stack to convey PCO data to the access network. The host includes this option in the DHCP Request message sent to the access gateway/NAS (Network Access Server) which acts as the DHCP server or relay.

Figure 4 illustrates an example of format of a DHCP message Options field carrying PCO information, for DHCPv4:
Option Code
   OPTION-IPv4-PCO (To Be Assigned) - 1 byte.
Length
   An 8-bit field indicating the length of the option
   excluding the 'Option Code' and the 'Length' fields.
DATA
   PCO data that is carried in this message.

### 3. DHCPv6 option for PCO

This option enables the host using an IPv6 stack to convey PCO data to the access network. The host includes this option in the DHCP Request message sent to the access gateway/NAS (Network Access Server) which acts as the the DHCP server or relay.

Figure 5 illustrates an example of of format of a DHCP message Options field carrying PCO information, for DHCPv6:
Option Code
   OPTION-IPv6-PCO (To Be Assigned) - 1 byte.
Length
   An 8-bit field indicating the length of the option
   excluding the 'Option Code' and the 'Length' fields.
DATA
   PCO data that is carried in this message.

### 4. Option usage

### 4.1. Usage of DHCPv4 Options for PCO transport

The requesting and sending of the proposed DHCP options follow the rules specified for DHCP options in [RFC2131].

### 4.1.1. Mobile Node behavior

The mobile node may include PCO data in the DHCPREQUEST message. The MN may receive unsolicited PCO data in the DHCPACK message.

### 4.1.2. DHCP server behavior

When the DHCP server receives the DHCPREQUEST message with a PCO Option the DHCP server contructs the response according to the requested option.

The DHCP server might optionally decide to send PCO data to the mobile node in the DHCPACK message.

### 4.2. Usage of DHCPv6 Options for PCO transport

The requesting and sending of the proposed DHCP options follow the rules specified for DHCP options in [RFC3315].

### 4.2.1. Mobile node behavior

The mobile node may include PCO data in the REQUEST message. The MN may receive unsolicited PCO data in the REPLY message.

### 4.2.2. DHCP server behavior

When the DHCP server receives the REQUEST message with a PCO Option the DHCP server contructs the response according to the requested option.

The DHCP server might optionally decide to send unsolicited PCO data to the mobile node in the REPLY message.

### 5. IANA Considerations

A new DHCPv4 option is defined:
PCO Option for DHCPv4 (OPTION-IPv4-PCO) To Be Assigned
   A new DHCPv6 option ies defined:
   PCO Option for DHCPv6 (OPTION-IPv6-PCO) To Be Assigned

### 6. Security Considerations

The security considerations in [RFC2131] apply. If an adversary manages to modify the response from a DHCP server or insert its own response, an MN could be led to receive a rogue PCO information. It is recommended to use either DHCP authentication option described in [RFC3118] where available, or rely upon link layer security.

This will also protect the denial of service attacks to DHCP servers. [RFC3118] provides mechanisms for both entity authentication and message authentication.

In one aspect of the present invention, in an embodiment, the present invention provides a method for exchanging signalling information between a Mobile Station MS and a PDN Gateway PDN-GW of a 3GPP Evolved Packet Core network EPC, at non 3GPP access to EPC, said method comprising a step of:
- exchanging said signalling information between MS and a non 3GPP Access Network entity, using IETF based protocol.

In an embodiment, said signalling information includes Protocol Configuration Options PCO information.

In an embodiment, non 3GPP corresponds to WiMAX.

In an embodiment, said method comprises a step of, in case of an interface between non 3GPP AN entity and 3GPP PDN-GW using CMIPv4 FA mode protocol:
- exchanging said signalling information between MS and non 3GPP AN entity using CMIP v4 protocol.

In an embodiment, said method comprises a step of:
- Mobile Station MS including said signalling information in a CMIPv4 Registration Request RRQ message sent to a non 3GPP AN entity acting as Foreign Agent FA.

In an embodiment, said method comprises a step of:
- a non 3GPP entity acting as Foreign Agent FA including said signalling information in a CMIPv4 Registration Response RRP message sent to Mobile Station MS.

In an embodiment, said method comprises a step of, in case of interface between non 3GPP AN entity and 3GPP PDN-GW using PMIPv6 protocol:
- exchanging said signalling information between MS and a non 3GPP Access Network entity using DHCP protocol.

In an embodiment, said method comprises a step of:
- Mobile Station MS including said signalling information in a specific Options field of a DHCP Request message sent to a non 3GPP AN entity acting as DHCP server or Relay.

In an embodiment, said method comprises a step of:
- a non 3GPP AN entity acting as DHCP server or Relay including said signalling information in a specific Options field of a DHCPAcknowledgement message sent to Mobile Station MS.

In an embodiment, said signalling exchange is performed at network entry in said non 3GPP Access Network.

In addition to a method for non 3GPP access to Evolved Packet Core EPC (examples of which have been decribed above), the present invention also has for its object different entities, such as in particular Mobile Station MS, non 3GPP Access network AN entity (such as in particular WiMAX ASN entity, such as WiMAX ASN Gateway ASN-GW), comprising means for performing such methods.

The detailed implementation of the above-mentioned means does not raise any special problem for a person skilled in the art, and therefore such means do not need to be more fully disclosed than has been made above, by their function, for a person skilled in the art.

## Claims

1. A method for exchanging signalling information between a Mobile Station MS and a PDN Gateway PDN-GW of a 3GPP Evolved Packet Core network EPC, at non 3GPP access to EPC, said method comprising a step of:
- exchanging said signalling information between MS and a non 3GPP Access Network entity, using IETF based protocol.

2. A method according to claim 1, wherein said signalling information includes Protocol Configuration Options PCO information.

3. A method according to claim 1 or 2, wherein non 3GPP corresponds to WiMAX.

4. A method according to any of claims 1 to 3, comprising a step of, in case of an interface between non 3GPP AN entity and 3GPP PDN-GW using CMIPv4 FA mode protocol:
- exchanging said signalling information between MS and non 3GPP AN entity using CMIP v4 protocol.

5. A method according to claim 4, comprising a step of:
- Mobile Station MS including said signalling information in a CMIPv4 Registration Request RRQ message sent to a non 3GPP AN entity acting as Foreign Agent FA.

6. A method according to claim 4 or 5, comprising a step of:
- a non 3GPP entity acting as Foreign Agent FA including said signalling information in a CMIPv4 Registration Response RRP message sent to Mobile Station MS.

7. A method according to any of claims 1 to 3, comprising a step of, in case of interface between non 3GPP AN entity and 3GPP PDN-GW using PMIPv6 protocol:
- exchanging said signalling information between MS and a non 3GPP Access Network entity using DHCP protocol.

8. A method according to claim 7, comprising a step of:
- Mobile Station MS including said signalling information in a specific Options field of a DHCP Request message sent to a non 3GPP AN entity acting as DHCP server or Relay.

9. A method according to claim 7 or 8, comprising a step of:
- a non 3GPP AN entity acting as DHCP server or Relay including said signalling information in a specific Options field of a DHCPAcknowledgement message sent to Mobile Station MS.

10. A method according to any of claims 1 to 9, wherein said signalling exchange is performed at network entry in said non 3GPP Access Network.

11. A Mobile Station MS, comprising means for performing a method according to any of claims 1 to 10.

12. A non 3GPP Access Network AN entity, in particular ASN Gateway ASN-GW, comprising means for performing a method according to any of claims 1 to 10.
